# FASCICULE DE BREVET EUROPEEN

(11) **EP 1 261 094 B1**
(45) Date de publication et mention de la délivrance du brevet: **17.08.2005**
(21) Numéro de dépôt: 02291266.1
(22) Date de dépôt: 23.05.2002
(51) Int. Cl.: H02G 15/013, H02G 15/113

(54) **Boîtier d'appareillage, notamment boîtier d'épissurage**
Gehäuse für Geräte, insbesondere Spleissgehäuse
Housing for apparatus, in particular, splice housing

(30) Priorité: 23.05.2001 FR 0106826
(43) Date de publication de la demande: 27.11.2002
(73) Titulaire: Nexans, 75008 Paris (FR)
(72) Inventeur: Milanowski, Michel, 60540 Anserville (FR); Vincent, Alain, 77230 Juilly (FR)
(74) Mandataire: Lenne, Laurence

(56) Documents cités:
- EP-A- 0 403 937
- EP-A- 0 543 350
- EP-A- 0 942 506
- EP-A- 0 942 507
- DE-U- 7 516 723

## Description

La présente invention concerne un boîtier d'appareillage, notamment boîtier d'épissurage.

L'invention se rapporte plus précisément à un boîtier d'appareillage, notamment boîtier d'épissurage, comportant un orifice d'insertion d'un câble, disposé en épi, associé à une partie de fermeture étanche de cet orifice pourvue de moyens de réception d'organes de fixation étanche du câble connus en soi.

Les boîtiers dans lesquels est disposé le matériel nécessaire au raccordement d'appareils dans des positions déterminés le long des câbles sont classiquement conçus étanches. Il est avantageux de préserver le plus possible la continuité des conducteurs électriques et/ou optiques d'un câble sur lequel des piquages de raccordement d'appareils sont effectués. Cela a donc conduit à la réalisation de boîtiers étanches permettant un passage du câble en traversée, via deux orifices réalisés sur deux parois opposées du boîtier ou un passage du câble replié en U dit en épi au travers d'une ouverture unique.

Les boîtiers agencés pour un passage en traversée prévoient généralement deux orifices nécessaires au passage du câble au niveau d'une zone de joint entre deux parties dissociables du boîtier, par exemple sous forme d'échancrures s'ouvrant au niveau de la zone d'appui d'un couvercle sur un caisson de boîtier.

Il est alors possible d'insérer un câble transversalement dans les échancrures, en évitant d'avoir à l'enfiler par une extrémité au travers d'un orifice, ce qui devient rapidement inacceptable dès que la longueur du câble est grande. De plus, très souvent, le boîtier sert à mettre en place une distribution sur des câbles fixes déjà mis en place et il est donc nécessaire de pouvoir poser le boîtier sans déplacement des câbles.

La mise en oeuvre d'un boîtier étanche comportant un passage de câble s'ouvrant au niveau de la zone de joint entre les parties de boîtier, implique une mise en place de moyens permettant d'assurer l'étanchéité dans la zone où le câble rejoint les deux parties de boîtier.

Le document de brevet européen EP 0 942 507 décrit un tel dispositif d'étanchéité pour un câble droit dans un accès semi-tubulaire et pour assurer l'étanchéité du boîtier au niveau de l'ouverture de l'accès. Ce dispositif comprend un organe d'enveloppe supplémentaire qui est pourvu d'une nervure longitudinale pour fermer l'accès semi-tubulaire et avec une rainure transversale sur la nervure pour recevoir un joint périphérique, un joint de câble et un guide-câble frontal poussé par un presseur sur le joint de câble.

Il est difficile d'obtenir et de conserver une étanchéité de ce type dite triple point, entre les éléments que constituent le câble et les deux parties jointives du boîtier, en raison des nécessaires coopérations entre éléments, en particulier par alignement, et notamment s'il y a réouverture du boîtier au cours du temps. Les documents EP 0 403 937 et EP 0 543 350 décrivent de tels boîtiers d'appareillage.

Les boîtiers agencés pour un passage en U dit en épi prévoient généralement une ouverture de forme allongée ménagée dans une paroi du caisson pour l'insertion d'une boucle du câble plié en U dans le boîtier. Cette ouverture est périphériquement bordée par une portée pour joint et entourée à chacune de ses extrémités par une tubulure externe qui est portée par le boîtier. Cette ouverture est fermée lors du montage par un joint comportant une bande d'obturation d'ouverture et deux tampons tubulaires perforés réalisés en saillie aux extrémités de la bande.

La demande de brevet européen EP 0 942 506, qui représente l'état de la technique le plus proche, divulgue un tel dispositif d'étanchéité pour un câble plié en U dit en épi, reçu dans un boîtier au travers d'un accès fermé périphériquement pourvu de deux parties de tubulure semi-tubulaires se faisant face et espacées. Le dispositif d'étanchéité comprend un joint unique pour l'étanchéité des deux sections du câble en épi dans l'accès et des moyens de pression adaptés pour fermer les parties de tubulure et presser le joint pour obtenir l'effet d'étanchéité souhaité.

Un tel dispositif d'étanchéité nécessite un joint de forme spécifique pour assurer la fermeture et l'étanchéité dudit accès.

Le but de invention est de proposer un dispositif d'étanchéité qui permette l'utilisation de joint de câble classique, à savoir cylindrique fendu.

L'invention propose un boîtier d'appareillage, notamment boîtier d'épissurage, qui comporte une paroi comportant un orifice d'insertion d'un câble, disposé en épi, associé à au moins une partie de fermeture étanche de cet orifice pourvu de moyens tubulaires de réception d'organes de fixation étanche du câble connus en soi, cette partie de fermeture étant de forme complémentaire de celle de l'orifice, caractérisé en ce que ledit orifice d insertion est de forme allongée ménagée dans la paroi du boîtier et est bordé par une portée pour joint et ladite partie de fermeture est constituée de deux parties identiques qui assemblées forment une paroi de fermeture de cet orifice pourvue de deux tubulures de réception d'organes de fixation étanche du câble et portant sur sa périphérie un joint d'etancheité surmoulé coopérant avec ladite portée pour joint.

Selon un mode de réalisation préféré, lesdites parties identiques sont constituées d'une demi-paroi pourvue de deux demi-tubulures.

De préférence, lesdites parties identiques sont pourvues sur leurs bords jointifs de joints surmoulés et d'un ensemble de positionnement par emboîtement mutuel.

Ladite partie de fermeture peut être réalisée dans le même matériau que le boîtier et être assemblée au boîtier par vissage.

De cette façon, la partie de fermeture une fois montée dans l'orifice d'insertion complète de boîtier de manière classique, formant une ou des tubulures de réception du câble qui y est fixé de façon étanche par un ensemble en soi connu de joint, guide-câble et presse étoupe ou presseur.

Un joint standard fendu peut être utilisé. De même l'ensemble guide-câble et presse-étoupe utilisé pour fixer de façon étanche le câble dans la tubulure est classique.

Ce type d'agencement peut de plus être utilisé pour un montage de câble en traversée comme pour un montage de câble en épi. Le même ensemble joint / guide-câble / presse-étoupe est utilisable dans les deux cas. Ceci diminue fortement le coût des appareillages, un seul kit d'étanchéité étant nécessaire.

De plus, un tel agencement permet de réaliser l'étanchéité à l'extérieur du boîtier et non à l'intérieur et en conséquence une large plage d'étanchéité est obtenue jusqu'à des diamètres de câbles importants.

Enfin, l'agencement de joint surmoulé assure une excellente étanchéité, tout en facilitant le montage.

L'invention est décrite d-après plus en détail à l'aide de figure ne représentant qu'un mode de réalisation préféré de l'invention.
La figure 1 est une vue en perspective d'un boîtier et d'un ensemble d'étanchéité avant montage, dans le cas d'un câble en traversée.
La figure 2 est une vue similaire après montage.
Les figures 3 et 4 sont des vues en perspective partielles corespondantes.
La figure 5 est une vue en perspective d'un boîtier conforme à l'invention avant montage, dans le cas d'un câble en épi.
La figure 6 est une vue similaire selon une étape de montage.
La figure 7 est une vue en perspective d'un boîtier et d'une ensemble d'étanchéité conforme à l'invention avant montage, dans le cas d'un câble en épi.
La figure 8 est une vue similaire après montage.

Les boîtiers dans lesquels est disposé le matériel nécessaire au raccordement d'appareils dans des positions déterminés le long des câbles sont classiquement conçus étanches. Il est avantageux de préserver le plus possible la continuité des conducteurs électriques et/ou optiques d'un câble sur lequel des piquages de raccordement d'appareils sont effectués. Cela a donc conduit à la réalisation de boîtiers étanches permettant un passage du câble en traversée, via deux orifices réalisés sur deux parois opposées du boîtier ou un passage du câble replié en U dit en épi au travers d'une ouverture unique

Un tel boîtier 1 est représenté partiellement sur les figures. De façon classique, il comporte une première partie ou caisson (représenté partiellement) dont l'ouverture est obturée par une seconde partie ou couvercle (non représenté) en appui sur un joint positionné en bordure 2 de l'ouverture. Un tel boîtier est décrit précisément dans les demandes de brevet européen EP 0 942 506 et EP 0 942 507.

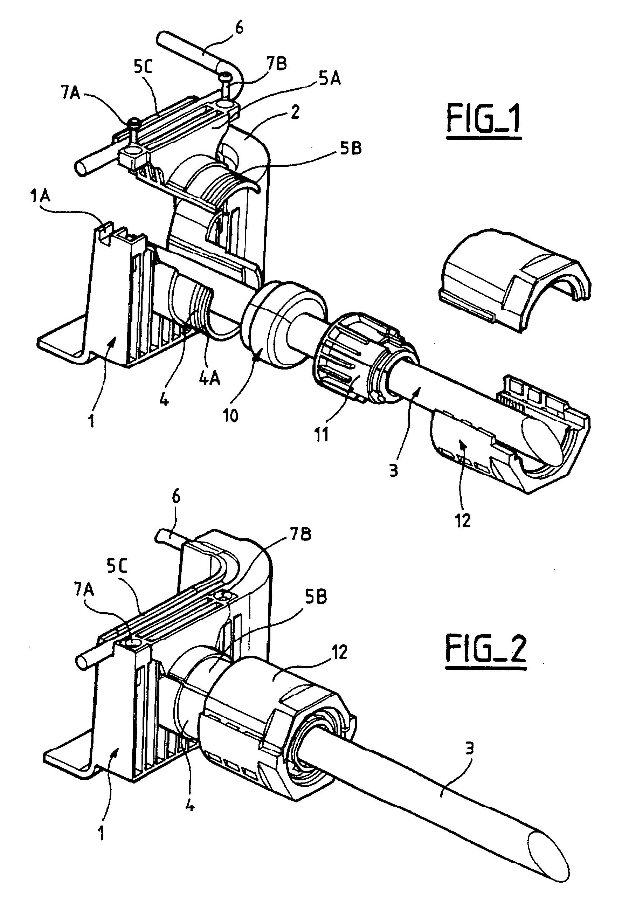

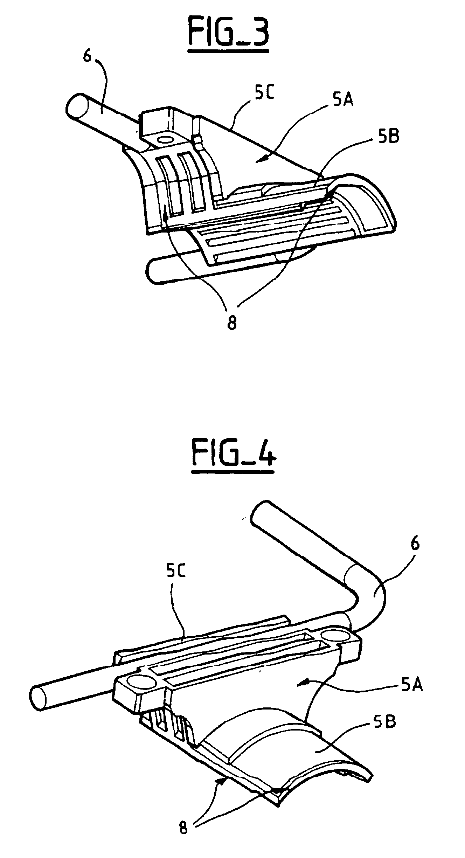

Les figures 1 à 4 représentent une réalisation en cas de montage d'un câble en traversée.

Une paroi latérale du boîtier 1 comporte un orifice d'insertion du câble 3 en forme de fente réalisée en bordure du caisson et pourvu du côté opposé à l'ouverture de la fente d'un tronçon de tubulure 4.

Cette fente est associée à une partie de fermeture 5 étanche de cet orifice pourvu de moyens tubulaires de réception d'organes de fixation étanche du câble connus en soi. La partie de fermeture 5 comporte une paroi de fermeture 5A de cette fente et un tronçon de tubulure 5B de forme complémentaire à celle du tronçon tubulaire 4 porté par le boîtier 1. Cette partie de fermeture 5 peut être réalisée dans le même matériau que le boîtier 1, à savoir en règle générale en matière plastique. Pratiquement, elle est de préférence en matière plastique chargée, par exemple de fibres de verre, afin d'assurer sa tenue mécanique.

La dimension de la paroi 5A est telle que son bord supérieur 5C vient en alignement avec la bordure 2 du caisson, une fois montée. Ce bord supérieur 5C comporte une rainure portant un joint torique 6 surmoulé destiné à être reçu sur la zone de bordure du caisson dans une rainure 1A correspondante.

Le joint 6 est un tronçon de joint et, une fois la partie de fermeture 5 mise en place, ce joint 6 vient s'abouter avec des tronçons de joint torique classiques mis en place sur le boîtier et assurant l'étanchéité entre boîtier et couvercle.

Selon un autre mode de réalisation, ce joint 6 peut être un joint d'étanchéité complet de boîtier et, une fois la partie de fermeture 5 mise en place, être disposé dans la rainure de réception sur toute la périphérie du boîtier 1 pour assurer l'étanchéité boîtier / couvercle.

La partie de fermeture 5 est assemblée au boîtier 1 par vissage, de préférence par deux vis 7A et 7B, traversant deux alésages ménagés sur ledit bord supérieur 5C et vissées dans la bordure 2 du caisson.

La partie de fermeture 5 est pourvue sur ses bords de jonction avec la fente d'insertion de joints surmoulés 8 d'étanchéité.

Une fois montée, la partie de fermeture 5 sur le boîtier 1 reconstitue un agencement de tubulure similaire à la tubulure classiquement moulée dans le boîtier et destinée à recevoir les organes de fixation étanche du câble connus en soi que sont un joint 10, un guide-câble 11 et un presse-étoupe 12 vissé sur le filetage 4A réalisé à l'extrémité de la tubulure constituée des tronçons 4 et 5B.

L'agencement de joint torique surmoulé 6 assure une excellente étanchéité au niveau de la zone de bordure caisson / couvercle, palliant au problème d'étanchéité triple point, puisque seulement deux pièces sont à ajuster mutuellement au lieu de trois.

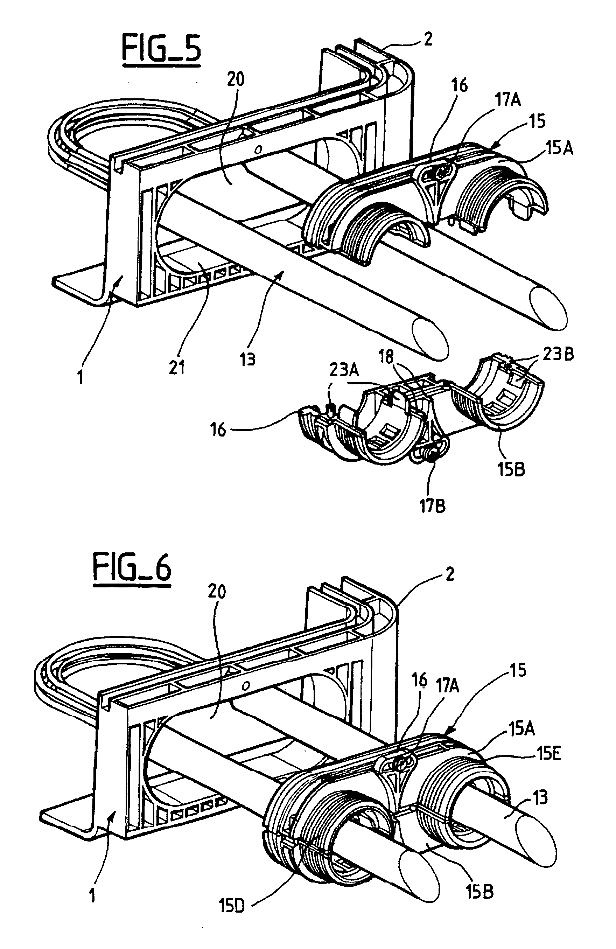

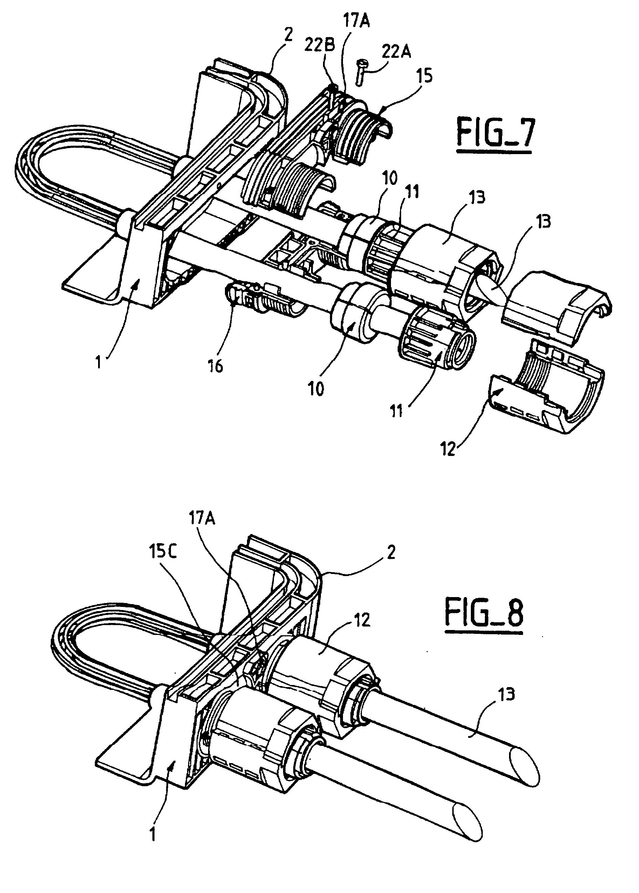

Les figures 5 à 8 représentent un mode de réalisation de l'invention correspondant au mode de réalisation en cas de montage d'un câble en épi.

Une paroi latérale du boîtier 1 comporte un orifice d'insertion 20 du câble 13 de forme allongée et bordé par une portée 21 pour joint.

Cet orifice 20 est associé à une partie de fermeture 15 étanche de cet orifice pourvu de moyens tubulaires de réception d'organes de fixation étanche du câble connus en soi. La partie de fermeture 15 est de forme complémentaire de celle de l'orifice 20 . Cette partie de fermeture 15 peut être réalisée dans le même matériau que le boîtier 1, à savoir en règle générale en matière plastique. Pratiquement, elle est de préférence en matière plastique chargée, par exemple de fibres de verre, afin d'assurer sa tenue mécanique.

La partie de fermeture 15 est constituée de deux parties identiques 15A, 15B constituées d'une demi-paroi pourvue de deux demi-tubulures, qui assemblées forment une paroi de fermeture 15C de cet orifice 20 pourvue de deux tubulures 15D, 15E de réception d'organes de fixation étanche du câble connus en soi et portant sur sa périphérie un joint surmoulé 16 destiné à coopérer avec la portée 21 de joint.

Ces dites parties 15A, 15B sont assemblées l'une à l'autre par vissage, de préférence chacune par deux vis 22A, 22B latérales. La partie de fermeture 15 ainsi formée est quant à elle assemblée au boîtier 1 également par vissage, de préférence par deux vis 17A, 17B frontales venant se visser dans la paroi latérale du caisson.

Ces parties identiques 15A, 15B sont pourvues sur leurs bords jointifs de joints surmoulés 18 et d'un ensemble de positionnement par emboîtement mutuel, de préférence un agencement de tenons 23A et de trous et/ou encoches 23B.

Une fois montée, la partie de fermeture 15 sur le boîtier 1 reconstitue un agencement de tubulure similaire à la tubulure classiquement moulée dans le boîtier et destinée à recevoir les organes de fixation étanche des deux sections de câble connus en soi que sont un joint 10, un guide-câble 11 et un presse-étoupe 12 vissé sur le filetage 4A réalisé à l'extrémité de la tubulure constituée des tronçons 15D, 15E.

## Revendications

1. Boîtier d'appareillage, notamment boîtier d'épissurage, qui comporte une paroi comportant un orifice d'insertion (20) d'un câble (13), disposé en épi, associé à au moins une partie de fermeture (15) étanche de cet orifice (20) pourvu de moyens tubulaires de réception d'organes de fixation étanche du câble connus en soi, cette partie de fermeture (15) étant de forme complémentaire de celle de l'orifice (20), **caractérisé en ce que** ledit orifice d'insertion (20) est de forme allongée ménagée dans la paroi du boîtier (1) et est bordé par une portée (21) pour joint et ladite partie de fermeture (15) est constituée de deux parties identiques (15A, 15B) qui assemblées forment une paroi de fermeture (15C) de cet orifice (20) pourvue de deux tubulures de réception (15D, 15E) d'organes de fixation étanche du câble et portant sur sa périphérie **un joint d'étanchéité surmoulé (16) coopérant avec ladite portée pour joint**.

2. Boîtier selon la revendication 1, **caractérisé en ce que** lesdites parties identiques (15A, 15B) sont constituées d'une demi-paroi pourvue de deux demi-tubulures.

3. Boîtier selon la revendication 2, **caractérisé en ce que** lesdites parties identiques (15A, 15B) sont pourvues sur leurs bords jointifs de joints surmoulés (18) et d'un ensemble de positionnement par emboîtement mutuel (23A, 23B).

4. Boîtier selon l'une des revendications précédentes, **caractérisé en ce que** ladite partie de fermeture (5, 15) est réalisée dans le même matériau que le boîtier (1).

5. Boîtier selon l'une des revendications précédentes, **caractérisé en ce que** ladite partie de fermeture (5, 15) est assemblée au boîtier (1) par vissage.

## Patentansprüche

1. Vorrichtuugsgehäuse, insbesondere Spleißgehäuse, das eine Wand umfasst, die eine Öffnung (20) für die Einführung eines U-förmig angeordneten Kabels (13) aufweist, der wenigstens ein Teil (15) zum dichten Verschließen dieser Öffnung (20) zugeordnet ist, das mit an sich bekannten rohrförmigen Mitteln für die Aufnahme von Organen zur dichten Befestigung des Kabels versehen ist, wobei dieser Verschlussteil (15) eine zu der Form der Öffnung (20) komplementäre Form besitzt, **dadurch gekennzeichnet, dass** die Einführungsöffnung (20) eine lang gestreckte Form hat, die in der Wand des Gehäuses (1) ausgespart und durch einen Dichntugsauffagefläche (21) eingefasst ist, und der Verschlussteil (15) aus zwei gleichen Teilen (15A, 15B) gebildet ist, die im zusammengefügten Zustand eine Wand (15C) zum Verschließen dieser Öffnung (20) bilden, die mit zwei Rohren (15D, 15E) für die Aufnahme von Organen zur dichten Befestigung des Kabels versehen ist und an ihrem Umfang eine Fonndichtung (16) trägt, die mit der Dichtungsauflagefläche zusammenwixkt.

2. Gehäuse nach Anspruch 1, **dadurch** gekennzeicbnet, dass die gleichen Teile (15A, 15B) jeweils aus einer Halbwand gebildet sind, die mit zwei Halbrohren versehen ist.

3. Gehäuse nach Anspruch 2, **dadurch gekennzeichnet, dass** die gleichen Teile (15A, 15B) an ihren Dichträndern mit Formdichtungen (18) und mit einer Gesamrheit zur Positionierung durch gegenseitiges Einpassen (23A, 23B) versehen sind.

4. Gehäuse nach einem der vorhergehenden Ansprüche, **dadurch gekennzeichnet, dass** das Verschlussteil (5,15) aus dem gleichen Material wie das Gehäuse (1) verwirklicht ist.

5. Gehäuse nach einem der vorhergehenden Ansprüche, **dadurch gekennzeichnet, dass** das Verschlussteil (5,15) mit dem Gehäuse (1) durch Schrauben zusammengefügt ist.

## Claims

1. Equipment closure in particular a splice closure which includes a wall comprising an insertion orifice (20) for a U-looped cable (13), associated with at least one closing part 15 to seal this orifice (20) provided with tubular means to receive members for the sealed fastening of the cable known in themselves, this closing part 15 being of complementary shape to the shape of the opening (20), **characterized in that** said insertion orifice (20) is of elongate shape arranged in the wall of the closure (1) and is bordered by a gasket seating (21) and said closing part (15) consists of two identical parts (15A, 15B) which when assembled form a closing wall (15C) for this orifice (20) that is provided with two tubes (15D, 15E) to receive the members for the sealed fastening of the cable and carries on its periphery **an embedded sealing gasket (16) cooperating with said gasket seating**.

2. Closure as in claim 1, **characterized in that** said identical parts (15A, 15B) consist of a semi-wall provided with two semi-tubular parts.

3. Closure as in claim 1 **characterized in that** said identical parts (15A, 15B) on their meeting edges are provided with embedded gaskets (18) and with an interlocking positioning assembly (23A, 23B).

4. Closure as in any of the preceding claims, **characterized in that** said closing part (5,15) is made in the same material as the closure (1).

5. Closure as in any of the preceding claims **characterized in that** said closing part (5, 15) is assembled to the closure (1) by screwing.
